# EUROPÄISCHE PATENTSCHRIFT

(11) **EP 4 225 529 B1**
(45) Veröffentlichungstag und Bekanntmachung des Hinweises auf die Patenterteilung: **04.03.2026**
(21) Anmeldenummer: 21778411.5
(22) Anmeldetag: 17.09.2021
(51) Int. Cl.: B23K 26/70, G02B 6/42

(54) **LASERSYSTEM MIT EINER LICHTLEITFASEREINHEIT SOWIE VERFAHREN ZUM BEURTEILEN EINER EINKOPPELGÜTE DER EINKOPPLUNG VON NUTZLICHT IN EINE LICHTLEITFASEREINHEIT**
LASER SYSTEM WITH AN OPTICAL FIBER UNIT AND METHOD FOR EVALUATING THE COUPLING QUALITY WHEN COUPLING USEFUL LIGHT INTO AN OPTICAL FIBER UNIT
SYSTÈME LASER À UNITÉ DE FIBRE OPTIQUE ET PROCÉDÉ POUR ÉVALUER LA QUALITÉ D'INJECTION LORS DE L'INJECTION DE LUMIÈRE UTILE DANS UNE UNITÉ DE FIBRE OPTIQUE

(30) Priorität: 09.10.2020 DE 102020212818
(43) Veröffentlichungstag der Anmeldung: 16.08.2023
(73) Patentinhaber: TRUMPF Laser SE, 78713 Schramberg (DE)
(72) Erfinder: KILLI, Alexander, 78647 Trossingen (DE); BUDNICKI, Aleksander, 79194 Gundelfingen (DE); BAUMBACH, Stefan, 77709 Oberwolfach (DE)
(74) Vertreter: Trumpf Patentabteilung
(86) Internationale Anmeldenummer: PCT/EP2021/075641
(87) Internationale Veröffentlichungsnummer: WO 2022/073746

(56) Entgegenhaltungen:
- DE-A1- 102018 114 368
- US-A1- 2011 305 249
- US-A1- 2020 249 120

## Beschreibung

Die Erfindung betrifft ein Lasersystem mit einer Lichtleitfasereinheit und ein Verfahren zum Beurteilen einer Einkoppelgüte der Einkopplung von Nutzlicht in eine Lichtleitfasereinheit. US 2011/305249 A1 offenbart ein Lasersystem gemäß dem Stand der Technik.

Ein Lasersystem der hier angesprochenen Art weist eine Lichtleitfasereinheit mit einer Lichtleitfaser auf, die einen zum Führen von Nutzlicht durch die Lichtleitfaser eingerichteten Lichtleitbereich und an einem als Einkoppelende bezeichneten Faserende eine erste Faserendfläche zur Einkopplung von Laserlicht in den Lichtleitbereich aufweist. An einem als Auskoppelende bezeichneten Faserende weist die Lichtleitfasereinheit eine zweite Faserendfläche zur Auskopplung von Laserlicht aus dem Lichtleitbereich auf.

Bei einer solchen Lichtleitfasereinheit besteht grundsätzlich das Erfordernis, Laserlicht mit möglichst hoher Strahlqualität und möglichst geringen Verlusten über das Einkoppelende in die Lichtleitfasereinheit einzukoppeln. Dabei erweist es sich als schwierig, eine Einkoppelgüte der Einkopplung geeignet zu bewerten und insbesondere zu überwachen. Es ist vorgeschlagen worden, die Einkoppelgüte zu überwachen, indem seitlich aus der Lichtleitfasereinheit austretendes Leckagelicht erfasst wird. Hierbei bildet sich jedoch typischerweise ein Leistungsplateau aus, sodass auch bei schlechter Strahlqualität noch eine hohe Leistung am Detektor gemessen wird. Dies verhindert eine optimale Justage der Einkopplung. Es ist auch vorgeschlagen worden, bei Lichtleitfasereinheiten, die einen Fasermantel aufweisen, im Fasermantel propagierendes Mantellicht zu erfassen. Auch dies erlaubt jedoch keine optimale Beurteilung der Einkoppelgüte und kommt darüber hinaus nur infrage, wenn das in die Lichtleitfasereinheit eingekoppelte Laserlicht höhere Moden aufweist, die im Fasermantel propagieren.

Der Erfindung liegt die Aufgabe zugrunde, ein Lasersystem mit einer Lichtleitfasereinheit und ein Verfahren zum Beurteilen einer Einkoppelgüte der Einkopplung von Nutzlicht in eine Lichtleitfasereinheit zu schaffen, wobei die genannten Nachteile zumindest reduziert, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Lasersystem geschaffen wird, welches eine Laserstrahlungsquelle zur Emission von Nutzlicht aufweist. Das Lasersystem weist außerdem eine Lichtleitfasereinheit auf, die eine Lichtleitfaser aufweist. Die Lichtleitfaser weist einen zum Führen von Nutzlicht durch die Lichtleitfaser eingerichteten Lichtleitbereich, an einem Einkoppelende als einem Faserende eine erste Faserendfläche zur Einkopplung von Laserlicht in den Lichtleitbereich und an einem Auskoppelende als einem anderen Faserende eine zweite Faserendfläche zur Auskopplung von Laserlicht aus dem Lichtleitbereich auf. Weiter weist das Lasersystem eine Koppeleinrichtung auf, die eingerichtet ist, um das Nutzlicht in die Lichtleitfasereinheit einzukoppeln. Das Lasersystem weist ein Reflexelement auf, das in Propagationsrichtung des Nutzlichts hinter der zweiten Faserendfläche angeordnet und eingerichtet ist, um einen Reflex des Nutzlichts von der Propagationsrichtung abzulenken und entgegen der Propagationsrichtung über die zweite Faserendfläche zurück in den Lichtleitbereich einzukoppeln. Außerdem weist das Lasersystem eine Messeinrichtung auf, die in Propagationsrichtung vor der ersten Faserendfläche angeordnet ist, und die eingerichtet ist, um den von dem Reflexelement abgelenkten Reflex des Nutzlichts zu erfassen.

Die Messeinrichtung ist bevorzugt eingerichtet, um eine Einkoppelgüte der Einkopplung des Nutzlichts in die Lichtleitfasereinheit anhand des erfassten Reflex des Nutzlichts zu beurteilen.

Das Reflexelement ist insbesondere hinter dem Auskoppelende angeordnet. Alternativ oder zusätzlich ist bevorzugt die Messeinrichtung vor dem Einkoppelende angeordnet. Insbesondere sind das Reflexelement und die Messeinrichtung nicht selbst Teil der Lichtleitfasereinheit, sondern zusätzlich zu der Lichtleitfasereinheit in dem Lasersystem vorgesehen und bevorzugt separat von dieser angeordnet.

Es wird somit bei dem hier vorgeschlagenen Lasersystem hinter dem Faserausgang der Lichtleitfaser ein Reflex erzeugt, der erneut in die Lichtleitfaser eingekoppelt wird, in dieser entgegen der Propagationsrichtung zurückläuft und schließlich als Rückreflex räumlich in Propagationsrichtung vor der Fasereinkopplung gemessen werden kann. Dieser Rückreflex kann dann vorteilhaft genutzt werden, um die Einkopplung auf Leistung zu justieren. Dabei bildet sich vorteilhaft bei der Leistungsmessung des rückgekoppelten Lichts kein Leistungsplateau aus. Somit kann die Einkoppelgüte reproduzierbar und mit sehr hoher Genauigkeit bestimmt werden. Die Messung ist insbesondere auch empfindlich auf eine verschlechterte Strahlqualität.

Diese Erfassung des Rückreflexes ermöglicht vorteilhaft insbesondere mit einem rein passiven Kollimationsmodul die Verwirklichung eines Justagemodus zur Optimierung des Einkoppelzustands, eine Modenüberwachung des erwarteten ausgekoppelten Lasermodes indirekt über den Rückreflex, und eine Laserleistungsregelung per Messung des Rückreflexes.

Unter einer Faserendfläche wird hier insbesondere eine gedachte oder physikalische Fläche verstanden, welche die Lichtleitfaser in Richtung ihrer längsten Erstreckung, das heißt ihrer Längsrichtung, die insbesondere mit der Propagationsrichtung des in der Lichtleitfaser propagierenden Nutzlichts zusammenfällt, begrenzt. Die Faserendfläche kann auch eine Teilfläche einer aus einer Mehrzahl von Endflächen zusammengesetzten Endflächenanordnung sein. In bevorzugter Ausgestaltung ist die Faserendfläche eine Faserendfacette.

Die Propagationsrichtung ist insbesondere eine Richtung, entlang der sich das Laserlicht ausgehend von der Laserstrahlungsquelle ausbreitet. Die Angabe "in Propagationsrichtung vor" einem Element bezeichnet einen Ort, der durch Photonen des Nutzlichts, die sich in Propagationsrichtung ausbreiten, zeitlich vor dem Element passiert wird, auf das sich die Angabe bezieht. Entsprechend bezeichnet die Angabe "in Propagationsrichtung hinter" einem Element einen Ort, der von sich in Propagationsrichtung ausbreitenden Photonen zeitlich nach dem in Bezug genommenen Element passiert wird.

Unter Nutzlicht wird hier insbesondere Licht verstanden, welches bestimmungsgemäß auf einem vorbestimmten Strahlpfad propagiert, der von einer Laserstrahlungsquelle durch den Lichtleitbereich bis zu einem Licht-Zielort führt. Der Licht-Zielort ist dabei insbesondere ein Ort, an dem das Nutzlicht bestimmungsgemäß angewendet wird, beispielsweise auf oder an einem Werkstück, welches mit Laserlicht bestrahlt, beispielsweise geschweißt oder geschnitten wird. Insbesondere ist Nutzlicht solches Licht, welches bestimmungsgemäß entlang der Propagationsrichtung durch den Lichtleitbereich propagiert. Insbesondere ist Nutzlicht die Summe aller Photonen oder Lichtstrahlen, die bei ungestörter Ausbreitung den Lichtleitbereich passieren würden, unabhängig davon, ob sie - in Propagationsrichtung - noch vor dem Lichtleitbereich, in dem Lichtleitbereich oder hinter dem Lichtleitbereich angeordnet sind und/oder abgezweigt werden. Für die Qualifizierung von Licht als einem Teil des Nutzlichts ist es demnach irrelevant, ob das Licht den Lichtleitbereich tatsächlich bereits passiert hat; vielmehr ist es ausreichend, dass das Licht den Lichtleitbereich bestimmungsgemäß passieren würde, wenn es nicht zuvor durch ein gegebenenfalls hierfür vorgesehenes Element abgelenkt würde. Insbesondere kann ein Teil des Nutzlichts in Propagationsrichtung vor dem Lichtleitbereich oder auch hinter dem Lichtleitbereich abgelenkt werden. Insbesondere ist Nutzlicht solches Licht, das bei einer Verwendung der Lichtleitfasereinheit in einer Laserbearbeitungsmaschine insbesondere ausgehend von der Laserstrahlungsquelle der Laserbearbeitungsmaschine entlang des Strahlpfads propagiert, der durch den Lichtleitbereich zu einem Werkstück als Licht-Zielort führt. Insbesondere ist das Nutzlicht kein Mantellicht und kein Leckagelicht.

Gemäß einer Weiterbildung der Erfindung ist vorgesehen, dass die Lichtleitfaser einen Mantelbereich aufweist, der den Lichtleitbereich in Umfangsrichtung umgreift. Der Lichtleitbereich ist insbesondere ein Fasermantel oder Teil eines Fasermantels. Ein solcher Mantelbereich kann vorteilhaft die Effizienz der Lichtleitung innerhalb der Lichtleitfaser erhöhen. Insbesondere abhängig von den Moden des in die Lichtleitfaser eingekoppelten Laserlichts ist es möglich, dass Mantellicht in dem Mantelbereich auftritt. Wichtig ist, dass unabhängig davon, ob in dem Mantelbereich Mantellicht auftritt, gemäß der hier vorgeschlagenen Lehre nicht das Mantellicht zur Beurteilung der Einkoppelgüte herangezogen wird, sondern vielmehr ein Teil, das heißt der Reflex, des durch den Lichtleitbereich propagierenden Nutzlichts.

Gemäß einer Weiterbildung der Erfindung ist vorgesehen, dass das Reflexelement als optisches Strahlformungselement zur Strahlformung des Nutzlichts ausgebildet ist. Ein solches Strahlformungselement kann beispielsweise eine Linse, insbesondere Kollimationslinse oder Zerstreuungslinse, ein diffraktives optisches Element, eine Wellenplatte, ein Axicon, oder ein Keil sein. Bei dieser Ausgestaltung wird vorteilhaft ein Rückreflex des Strahlformungselements genutzt, wodurch das Lasersystem kompakt ausgebildet sein kann.

Alternativ ist bevorzugt das Reflexelement zusätzlich zu einem optischen Strahlformungselement in einem Strahlpfad des Nutzlichts angeordnet. Ein solches Strahlformungselement kann beispielsweise eine Linse, insbesondere Kollimationslinse oder Zerstreuungslinse, ein diffraktives optisches Element, eine Wellenplatte, ein Axicon, oder ein Keil sein. Bei dieser Ausgestaltung wird also nicht ein Rückreflex des Strahlformungselements genutzt, sondern vielmehr ein separates Reflexelement bereitgestellt, das insbesondere eigens zur Erzeugung des Rückreflexes vorgesehen ist. Ein Strahlformungselement weist typischerweise eine Antireflexbeschichtung hoher Güte auf. Demgegenüber weist das Reflexelement vorzugsweise zumindest an einer Fläche eine Antireflexbeschichtung reduzierter Güter auf, um einen größeren Anteil des Nutzlichts zurückreflektieren zu können als das Strahlformungselement.

Gemäß einer Weiterbildung der Erfindung ist vorgesehen, dass das Reflexelement als ein Element ausgebildet ist, das ausgewählt ist aus einer Gruppe, bestehend aus: Einer plan-parallelen Platte und einem Fenster. Ist das Reflexelement eine plan-parallele Platte oder ein Fenster, ist es vorzugsweise zusätzlich zu einem Strahlformungselement vorgesehen.

Gemäß einer Weiterbildung der Erfindung ist vorgesehen, dass die Lichtleitfaser als photonische Kristallfaser mit hohlem Kern (Hollow Core Photonic Crystal Fiber - HC-PCF) ausgebildet ist. Alternativ ist die Lichtleitfaser bevorzugt als photonische Bandlücken-Faser (Band Gap-Faser) ausgebildet. Alternativ ist die Lichtleitfaser bevorzugt als Antiresonante Faser (Antiresonant Coupling Fiber) ausgebildet. Insbesondere ist die Lichtleitfaser bevorzugt als Tubularfaser ausgebildet. Alternativ ist die Lichtleitfaser bevorzugt als gehemmte Kopplungsfaser (Inhibited Coupling Fiber) ausgebildet, insbesondere als Kagoméfaser. Solche Fasern eignen sich insbesondere zur Führung ultrakurzer Pulse, mithin für Ultrakurzpulsanwendungen wie beispielsweise Ultrakurzpulsschweißen.

Gemäß der Erfindung ist vorgesehen, dass das Reflexelement an einer bezüglich der Propagationsrichtung des Nutzlichts vorderen Stirnfläche mit einer ersten Antireflexbeschichtung versehen ist, die einen ersten Reflexionsgrad aufweist. Das Reflexelement ist an einer bezüglich der Propagationsrichtung des Nutzlichts rückwärtigen Stirnfläche mit einer zweiten Antireflexbeschichtung versehen, die einen zweiten Reflexionsgrad aufweist. Der erste Reflexionsgrad ist größer als der zweite Reflexionsgrad. Somit kann vorteilhaft einerseits ein für die Kontrolle der Einkopplung hinreichend intensiver Rückreflex erzeugt werden, zugleich andererseits aber vermieden werden, dass das Reflexelement insgesamt eine unnötig geringe Transmission aufweist und damit das Nutzlicht nachteilig schwächt. Es wird also in vorteilhafter Ausgestaltung insbesondere eine Abwägung zwischen der Erzeugung eines aussagekräftigen Rückreflexes einerseits und einer möglichst ungeschwächten Transmission des Nutzlichts andererseits erzielt. Gemäß einer bevorzugten Ausgestaltung ist der Reflexionsgrad an der vorderen Stirnfläche insbesondere im Vergleich zu typischerweise verwendeten Antireflexbeschichtungen erhöht, um einen definierten, für eine aussagekräftige Messung der Einkoppelgüte verwendbaren Rückreflex zu erzeugen. An der rückwärtigen Stirnfläche weist das Reflexelement bevorzugt demgegenüber einen für Antireflexbeschichtungen üblichen Reflexionsgrad auf, sodass vorteilhaft Leistungsverluste minimiert, insbesondere unnötige Leistungsverluste vermieden werden. Erfindungsgemäß beträgt der erste Reflexionsgrad von mindestens 0,3 % bis höchstens 2 %, und in Ausgestaltungen, die nicht unter die Ansprüche fallen, beträgt er von mindestens 0,1 % bis höchstens 1 %, vorzugsweise von mindestens 0,5 % bis höchstens 1 %, vorzugsweise von mindestens 0,1 % bis höchstens 0,5 %. Der zweite Reflexionsgrad beträgt erfindungsgemäß höchstens 0,2 %, vorzugsweise höchstens 0,1 %.

Gemäß einer Weiterbildung der Erfindung ist vorgesehen, dass die Messeinrichtung eine Lichtmesseinrichtung aufweist, die eingerichtet ist, um eine Lichtleistung und/oder ein Modenprofil des erfassten Reflex des Nutzlichts zu erfassen.

Die Lichtmesseinrichtung ist vorzugsweise als Kamera ausgebildet. Dies erlaubt eine genaue Messung der Lage des Reflexes in der Bildebene der Kamera.

Alternativ ist die Lichtmesseinrichtung bevorzugt als Photodiode ausgebildet. Auf diese Weise lässt sich - gegebenenfalls insbesondere kostengünstiger als mit einer Kamera - sehr genau die Lage des Reflexes und damit die Einkoppelgüte beurteilen.

Gemäß einer Weiterbildung der Erfindung ist vorgesehen, dass die Messeinrichtung eine Steuereinrichtung aufweist, wobei die Koppeleinrichtung eine ansteuerbare Justiereinrichtung aufweist, die eingerichtet ist, um die Einkopplung des Nutzlichts in die Lichtleitfasereinheit zu justieren. Die Steuereinrichtung ist mit der Justiereinrichtung wirkverbunden und eingerichtet, um die Justiereinrichtung in Abhängigkeit von dem erfassten Reflex des Nutzlichts anzusteuern. Auf diese Weise ist vorteilhaft insbesondere eine automatische oder automatisierte, vorzugsweise auch permanente, insbesondere in Echtzeit ablaufende Justierung der Einkopplung und damit insbesondere Nachregelung der Einkoppelgüte möglich. Die Justiereinrichtung weist in bevorzugter Ausgestaltung zwei motorisierte Spiegelhalter auf, die mittels der Steuereinrichtung so angesteuert werden können, dass die Einkopplung des Nutzlichts in die Lichtleitfasereinheit optimiert wird. Alternativ oder zusätzlich ist bevorzugt möglich, dass die Justiereinrichtung eine justierbare, das heißt insbesondere verstellbare, Einkoppellinse aufweist.

Das Lasersystem weist bevorzugt ein in Propagationsrichtung vor der ersten Faserendfläche angeordnetes Messreflexelement auf, das eingerichtet ist, um durch den Lichtleitbereich zurückgeführtes Licht von dem Strahlpfad des Nutzlichts wegzuleiten, insbesondere in Richtung der Messeinrichtung. Dabei kann es sich insbesondere um den Reflex von dem Reflexelement handeln. Alternativ oder zusätzlich ist es aber auch möglich, dass das durch den Lichtleitbereich zurückgeführte und durch das Messreflexelement von dem Strahlpfad weggeleitete Licht Prozesslicht ist, das eine Beurteilung des mit dem Nutzlicht durchgeführten Arbeitsprozesses erlaubt. Unter "Wegleiten" wird insbesondere - besonders bei einem teiltransparenten Umlenkelement und abhängig von dem ungestörten Strahlpfad des Nutzlichts - "Durchlassen" oder "Ablenken" verstanden.

Das Messreflexelement kann in das Einkoppelende der Lichtleitfasereinheit integriert sein, beispielsweise in eine Endkappe oder einen Stecker der Lichtleitfaser. Es kann sich aber auch um ein separates, zusätzlich zu der Lichtleitfasereinheit und insbesondere getrennt zu dieser vorgesehenes Element handeln.

Wird das Messreflexelement zusätzlich oder alternativ zu der Wegleitung des von dem Reflexelement stammenden Reflexes genutzt, um eine Prozessüberwachung des mit dem Nutzlicht durchgeführten Arbeitsprozesses zu verwirklichen, kann insbesondere ein Verhältnis aus eingestrahlter Lichtleistung zu zurückkommender Lichtleistung als Maß für die Rückwirkung vom Prozess dienen. Das Messreflexelement ist dann vorteilhaft eingerichtet, um durch den Lichtleitbereich zurückgeführtes Prozesslicht in Richtung der Messeinrichtung zu leiten.

In bevorzugter Ausgestaltung ist das Messreflexelement zusätzlich eingerichtet, um einen weiteren Teil des in Propagationsrichtung einfallende Nutzlichts einkoppelseitig in Richtung einer zusätzlichen Lichtmesseinrichtung von dem Strahlpfad wegzuleiten. Somit ist es möglich, zum Zweck der Prozessüberwachung auch die eingestrahlte Leistung zu beurteilen und insbesondere ein Verhältnis aus eingestrahlter Leistung zu zurückkommender Leistung als Maß für eine Rückwirkung vom Prozess zu bilden. Die zusätzliche Lichtmesseinrichtung ist bevorzugt Teil der Messeinrichtung, die entsprechend zusätzlich eingerichtet ist, um den Arbeitsprozess zu beurteilen. Insbesondere kann ein Vergleich der Messwerte der Lichtmesseinrichtung einerseits und der zusätzlichen Lichtmesseinrichtung andererseits zusätzlich oder alternativ zu der Prozessüberwachung auch zur optischen Faserbruchüberwachung verwendet werden.

Es ist aber auch möglich, dass anstelle des Messreflexelements ein zusätzliches optisches Umlenkelement, insbesondere ein Strahlteiler, verwendet wird, um den weiteren Teil des in Propagationsrichtung einfallenden Nutzlichts einkoppelseitig in Richtung der zusätzlichen Lichtmesseinrichtung wegzuleiten, oder ein Justierspiegel ist hierzu teiltransparent ausgebildet.

Der teiltransparente Justierspiegel kann zusätzlich oder alternativ auch verwendet werden, um den von dem Reflexelement kommenden Reflex zu der Lichtmesseinrichtung durchzulassen.

Gemäß einer Weiterbildung der Erfindung ist vorgesehen, dass die Messeinrichtung zusätzlich eingerichtet ist, um den weiteren, vor dem Einkoppeln in die Lichtleitfasereinheit von dem Strahlpfad weggeleiteten Teil des Nutzlichts zu erfassen. Die Messeinrichtung ist weiter eingerichtet, um einen unter Verwendung des Nutzlichts mit dem Lasersystem durchgeführten Bearbeitungsprozess anhand des erfassten Reflex des Nutzlichts oder des erfassten Prozesslichts und des erfassten weiteren Teils des Nutzlichts zu beurteilen. Insbesondere auf diese Weise kann eine Prozessüberwachung durchgeführt werden, wobei bevorzugt ein Verhältnis aus eingestrahlter Leistung zu zurückkommender Leistung als Maß für eine Rückwirkung vom Prozess betrachtet wird. Des Weiteren kann bevorzugt eine Schnellabschaltung durchgeführt werden, wenn zurückkommendes Licht erwartet wird, aber keines detektiert werden kann. Insbesondere kann auf diese Weise eine optische Faserbruchüberwachung verwirklicht werden.

Insbesondere wird bevorzugt das Messreflexelement, das zusätzliche optische Umlenkelement oder ein teiltransparenter Justierspiegel verwendet, um den weiteren, vor dem Einkoppeln in die Lichtleitfasereinheit von dem Strahlpfad weggeleiteten Teil des Nutzlichts zu erfassen. Wird hierzu das Messreflexelement verwendet, dient dieses in vorteilhafter Ausgestaltung zugleich dazu, den Reflex des Nutzlichts oder das Prozesslicht auf die Messeinrichtung zu leiten.

Die Aufgabe wird schließlich auch gelöst, indem ein Verfahren zum Beurteilen einer Einkoppelgüte der Einkopplung von Nutzlicht einer Laserstrahlungsquelle in eine Lichtleitfasereinheit geschaffen wird, wobei im Rahmen des Verfahrens ein erfindungsgemäßes Lasersystem oder eine Lasersystem nach einem der zuvor beschriebenen Ausführungsbeispiele verwendet wird. In Zusammenhang mit dem Verfahren verwirklichen sich dabei insbesondere die bereits zuvor in Zusammenhang mit dem Lasersystem beschriebenen Vorteile.

Im Rahmen des Verfahrens wird insbesondere ein von dem Reflexelement der Lichtleitfasereinheit abgelenkter Reflex des Nutzlichts erfasst, wobei die Einkoppelgüte anhand des erfassten Reflex des Nutzlichts beurteilt wird.

Vorzugsweise wird dabei eine Lichtleistung und/oder ein Modenprofil des erfassten Reflex des Nutzlichts erfasst.

Bevorzugt wird die Einkopplung des Nutzlichts in die Lichtleitfasereinheit automatisch auf der Grundlage des erfassten Reflex des Nutzlichts justiert.

Bevorzugt wird die Emission des Nutzlichts unterbunden, wenn eine Intensität des erfassten Reflex des Nutzlichts unter einen vorbestimmten Schwellenwert abfällt.

Bevorzugt wird ein weiterer, vor dem Einkoppeln in die Lichtleitfasereinheit von dem Strahlpfad des Nutzlichts weggeleiteter Teil des Nutzlichts erfasst. Dabei wird vorzugsweise ein unter Verwendung des Nutzlichts mit dem Lasersystem durchgeführter Bearbeitungsprozess anhand des erfassten Reflex des Nutzlichts oder des erfassten Prozesslichts und anhand des erfassten weiteren Teils des Nutzlichts beurteilt.

Die Erfindung wird im Folgenden anhand der Zeichnung näher erläutert. Dabei zeigen:
- Figur 1: eine schematische Darstellung eines ersten Ausführungsbeispiels eines Lasersystems mit einem Ausführungsbeispiel einer Lichtleitfasereinheit, und
- Figur 2: eine schematische Darstellung eines zweiten Ausführungsbeispiels eines Lasersystems.

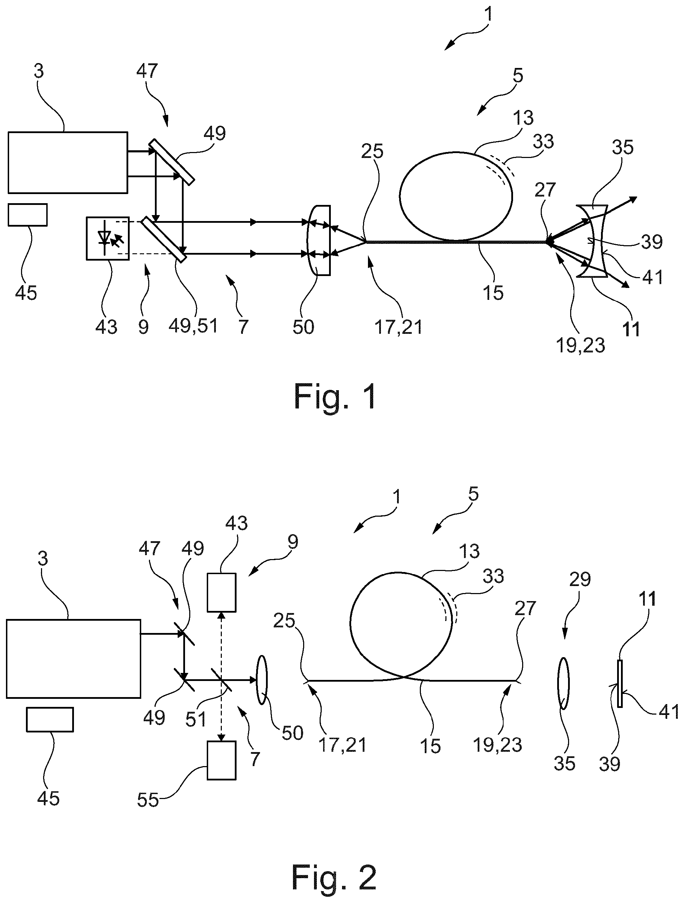

**Fig. 1** zeigt eine schematische Darstellung eines ersten Ausführungsbeispiels eines Lasersystems 1, dass eine Laserstrahlungsquelle 3 zur Emission von Nutzlicht sowie ein Ausführungsbeispiel einer Lichtleitfasereinheit 5 aufweist. Die Laserstrahlungsquelle 3 ist insbesondere als Laser, vorzugsweise als Ultrakurzpulslaser ausgebildet. Außerdem weist das Lasersystem 1 eine Koppeleinrichtung 7 zum Einkoppeln des Nutzlichts in die Lichtleitfasereinheit 5 auf. Weiterhin weist das Lasersystem 1 eine Messeinrichtung 9 auf, die eingerichtet ist, um einen von einem Reflexelement 11 der Lichtleitfasereinheit 5 abgelenkten Reflex des Nutzlichts zu erfassen. Die Messeinrichtung 9 ist bevorzugt eingerichtet, um eine Einkoppelgüte der Einkopplung des Nutzlichts in die Lichtleitfasereinheit 5 anhand des erfassten Reflex des Nutzlichts zu beurteilen.

Die Lichtleitfasereinheit 5 weist eine Lichtleitfaser 13 auf, die einen zum Führen von Nutzlicht durch die Lichtleitfaser 13 eingerichteten Lichtleitbereich 15 und an einem ersten Faserende 17, das ein Einkoppelende 21 ist, eine erste Faserendfläche 25 zur Einkopplung von Laserlicht in den Lichtleitbereich 15, und an einem zweiten Faserende 19, das ein Auskoppelende 23 ist, eine zweite Faserendfläche 27 zur Auskopplung von Laserlicht aus dem Lichtleitbereich 15 aufweist.

Das Reflexelement 11 ist in Propagationsrichtung des Nutzlichts hinter der zweiten Faserendfläche 27, insbesondere hinter dem Auskoppelende 23, angeordnet und eingerichtet, um den Reflex des Nutzlichts von der Propagationsrichtung abzulenken und entgegen der Propagationsrichtung über die zweite Faserendfläche 27 zurück in den Lichtleitbereich 15 einzukoppeln. Die Messeinrichtung 9 ist in Propagationsrichtung des Nutzlichts vor der ersten Faserendfläche 25, insbesondere vor dem Einkoppelende 21, angeordnet. Der von dem Reflexelement 11 abgelenkte und durch den Lichtleitbereich 15 zurückgeführte Reflex des Nutzlichts kann durch die Messeinrichtung 9 erfasst und vorteilhaft zur Beurteilung der Einkoppelgüte genutzt werden. Dabei ist insbesondere eine sehr stabile und reproduzierbare Beurteilung der Einkoppelgüte möglich, wobei insbesondere auch die Strahlqualität erfasst wird, wobei insbesondere die Ausbildung eines Leistungsplateaus vermieden ist.

In bevorzugter Ausgestaltung weist die Lichtleitfaser 13 einen hier nur schematisch angedeuteten Mantelbereich 33 auf, der den Lichtleitbereich 15 in Umfangsrichtung umgreift.

Das Lasersystem 1, bevorzugt die Lichtleitfasereinheit 5, weist außerdem ein optisches Strahlformungselement 35, hier in Form einer Linse, insbesondere einer Zerstreuungslinse, auf. Das optische Strahlformungselement 35 ist zur Strahlformung des Nutzlichts, insbesondere zu dessen Auskopplung aus dem Lichtleitbereich 15 sowie zur Aufweitung des Nutzlichts vorgesehen. Bei diesem ersten Ausführungsbeispiel der Lichtleitfasereinheit 5 ist das Reflexelement 11 als das Strahlformungselement 35 ausgebildet oder wird durch das Strahlformungselement 35 gebildet. Insbesondere ist es als Linse, insbesondere Zerstreuungslinse ausgebildet. Es bedarf dann keines separaten Reflexelements 11, sodass diese Ausgestaltung besonders kompakt ist. Das Strahlformungselement 35 kann alternativ auch als diffraktives optisches Element, als Wellenplatte, als Axicon, oder als Keil ausgebildet sein.

Die Lichtleitfaser 13 ist bevorzugt als photonische Kristallfaser mit hohlem Kern, als photonische Bandlücken-Faser, als Antiresonante Faser, insbesondere Tubularfaser, oder als gehemmte Kopplungsfaser, insbesondere Kagoméfaser, ausgebildet.

Das Reflexelement 11 ist an einer bezüglich der Propagationsrichtung des Nutzlichts vorderen Stirnfläche 39 mit einer ersten Antireflexbeschichtung versehen, die einen ersten Reflexionsgrad aufweist. Das Reflexelement ist an einer bezüglich der Propagationsrichtung des Nutzlichts rückwärtigen Stirnfläche 41 mit einer zweiten Antireflexbeschichtung versehen, die einen zweiten Reflexionsgrad aufweist. Der erste Reflexionsgrad ist größer als der zweite Reflexionsgrad. Bevorzugt ist der Reflexionsgrad an der vorderen Stirnfläche 39 insbesondere im Vergleich zu typischerweise verwendeten Antireflexbeschichtungen erhöht, um einen definierten, für eine aussagekräftige Messung der Einkoppelgüte verwendbaren Rückreflex zu erzeugen. An der rückwärtigen Stirnfläche 41 weist das Reflexelement 11 demgegenüber bevorzugt einen für Antireflexbeschichtungen üblichen Reflexionsgrad auf, sodass vorteilhaft Leistungsverluste minimiert, insbesondere unnötige Leistungsverluste vermieden werden. Erfindungsgemäß beträgt der erste Reflexionsgrad von mindestens 0,3 % bis höchstens 2 %, und in Ausgestaltungen, die nicht unter die Ansprüche fallen, beträgt er von mindestens 0,1 % bis höchstens 1 %, vorzugsweise von mindestens 0,5 % bis höchstens 1 %, vorzugsweise von mindestens 0,1 % bis höchstens 0,5 %. Der zweite Reflexionsgrad beträgt erfindungsgemäß höchstens 0,2 %, vorzugsweise höchstens 0,1 %.

Die Messeinrichtung 9 weist bevorzugt eine Lichtmesseinrichtung 43 auf, die eingerichtet ist, um eine Lichtleistung und/oder ein Modenprofil des erfassten Reflex des Nutzlichts zu erfassen. Die Lichtmesseinrichtung 43 ist in bevorzugter Ausgestaltung als Kamera oder als Photodiode ausgebildet.

Die Messeinrichtung 9 weist außerdem bevorzugt eine Steuereinrichtung 45 auf. Die Koppeleinrichtung 7 weist bevorzugt eine ansteuerbare Justiereinrichtung 47 zum Justieren der Einkopplung des Nutzlichts in die Lichtleitfasereinheit 5 auf. Die Steuereinrichtung 45 ist mit der Justiereirichtung 47 wirkverbunden und eingerichtet, um die Justiereinrichtung 47 in Abhängigkeit von dem erfassten Reflex des Nutzlichts anzusteuern. In bevorzugter Ausgestaltung weist die Justiereinrichtung 47 zwei motorisierte Spiegelhalter 49 auf, die durch die Steuereinrichtung 45 für eine automatische Justage der Einkopplung angesteuert werden können. Alternativ kann auch eine Einkoppellinse 50 einstellbar, insbesondere justierbar ausgebildet und durch die Steuereinrichtung 45 für eine automatische Justage der Einkopplung ansteuerbar sein.

Die Messeinrichtung 9 weist außerdem ein Messreflexelement 51 auf, um den von dem Reflexelement 11 durch den Lichtleitbereich 15 zurückgeführten Reflex des Nutzlichts von einem Strahlpfad des Nutzlichts vorzugsweise in einem bestimmten Winkel, insbesondere in Richtung der Messeinrichtung 43, wegzuleiten. Das Messreflexelement 51 wird hier in besonders kompakter Weise durch einen in dem zweiten Spiegelhalter 49 gehaltenen, teiltransparenten Justierspiegel gebildet. Es kann aber auch separat und zusätzlich zu diesem vorgesehen sein.

Das Messreflexelement 51 kann zusätzlich verwendet werden, um zum Zweck der Prozessüberwachung ein Maß für die eingekoppelte Leistung mittels einer zusätzlichen Lichtmesseinrichtung zu erfassen. Die Prozessüberwachung wird in Zusammenhang mit Figur 2 näher erläutert.

**Fig. 2** zeigt eine schematische Darstellung eines zweiten Ausführungsbeispiels des Lasersystems 1 mit einem zweiten Ausführungsbeispiel der Lichtleitfasereinheit 5. Gleiche und funktionsgleiche Elemente sind in allen Figuren mit gleichen Bezugszeichen versehen, sodass insoweit jeweils auf die vorangegangene Beschreibung verwiesen wird.

Das Reflexelement 11 ist bei dem zweiten Ausführungsbeispiel des Lasersystems 1 zusätzlich zu dem optischen Strahlformungselement 35, das hier als Kollimationslinse ausgebildet ist, und separat von diesem vorgesehen. Das Reflexelement 11 ist hier bevorzugt als plan-parallele Platte ausgebildet. Alternativ ist es möglich, dass das Reflexelement 11 als Fenster ausgebildet ist.

Durch das hier separat von dem Spiegelhalter 49 vorgesehene Messreflexelement 51 wird bevorzugt zusätzlich auch ein Teil des in Propagationsrichtung einfallenden Nutzlichts einkoppelseitig in Richtung der zusätzlichen Lichtmesseinrichtung 55 abgelenkt.

Das Messreflexelement 51 kann insbesondere verwendet werden, um eine Prozessüberwachung durchzuführen, indem Prozesslicht durch die Lichtmesseinrichtung 43 erfasst wird. Zugleich kann ein Maß für die eingekoppelte Leistung mittels der zusätzlichen Lichtmesseinrichtung 55 erfasst werden, wobei ein Vergleich der erfassten Prozesslichtleistung mit der eingekoppelten Leistung zur Beurteilung des Arbeitsprozesses herangezogen werden kann. Die zusätzliche Lichtmesseinrichtung 55 ist bevorzugt Teil der Messeinrichtung 9, wobei die Messeinrichtung 9 zusätzlich eingerichtet ist, um entsprechend den Arbeitsprozess zu beurteilen. Entsprechend kann ein Vergleich der Messwerte der Lichtmesseinrichtung 43 einerseits und der zusätzlichen Lichtmesseinrichtung 55 andererseits auch zur optischen Faserbruchüberwachung verwendet werden.

Das Messreflexelement 51 kann insbesondere als Messspiegel ausgebildet sein, wobei durch geeignete Beschichtung einer Vorderseite und einer Rückseite des Messreflexelements 51 gewährleistet ist, dass das Nutzlicht den Messspiegel in Propagationsrichtung nahezu unvermindert passieren kann, wobei jedoch der Rückreflex mit ausreichender Intensität auf die Lichtmesseinrichtung 43 gelenkt wird. Insbesondere werden bevorzugt in Propagationsrichtung 99 % des Nutzlichts durchgelassen, und ein Anteil von 1 % des Rückreflexes wird auf die Lichtmesseinrichtung 43 reflektiert. In alternativer Ausgestaltung kann das Messreflexelement 51 auch als Dünnschichtpolarisator ausgebildet sein, wobei eine hier nicht dargestellte l/2-Platte die Polarisation des Rückreflexes auf dem Rückweg dreht.

Im Rahmen eines Verfahrens zum Beurteilen der Einkoppelgüte der Einkopplung des Nutzlichts der Laserstrahlungsquelle 3 in die Lichtleitfasereinheit 5 wird bevorzugt ein Lasersystem 1 nach einem der zuvor beschriebenen Ausführungsbeispiele verwendet, wobei bevorzugt die Emission des Nutzlichts unterbunden wird, wenn eine Intensität des erfassten Reflex des Nutzlichts unter einen vorbestimmten Schwellenwert abfällt. Insbesondere auf diese Weise kann eine optische Faserbruchüberwachung realisiert werden.

## Patentansprüche

1. Lasersystem (1) mit
- einer Laserstrahlungsquelle (3) zur Emission von Nutzlicht,
- einer Lichtleitfasereinheit (5), die eine Lichtleitfaser (13) aufweist, wobei die Lichtleitfaser (13) einen zum Führen von Nutzlicht durch die Lichtleitfaser (13) eingerichteten Lichtleitbereich (15) und an einem Einkoppelende (21) als einem Faserende (17,19) eine erste Faserendfläche (25) zur Einkopplung von Laserlicht in den Lichtleitbereich (15) und an einem Auskoppelende (23) als einem anderen Faserende (17,19) eine zweite Faserendfläche (27) zur Auskopplung von Laserlicht aus dem Lichtleitbereich (15) aufweist,
- einer Koppeleinrichtung (7) zum Einkoppeln des Nutzlichts in die Lichtleitfasereinheit (5),
- einem Reflexelement (11), das in Propagationsrichtung des Nutzlichts hinter der zweiten Faserendfläche (27) angeordnet und eingerichtet ist, um einen Reflex des Nutzlichts von der Propagationsrichtung abzulenken und entgegen der Propagationsrichtung über die zweite Faserendfläche (27) zurück in den Lichtleitbereich (15) einzukoppeln, und mit
- einer in Propagationsrichtung vor der ersten Faserendfläche (25) angeordneten Messeinrichtung (9), die eingerichtet ist, um den von dem Reflexelement (11) abgelenkten Reflex des Nutzlichts zu erfassen, wobei das Reflexelement (11) an einer bezüglich der Propagationsrichtung des Nutzlichts vorderen Stirnfläche (39) mit einer ersten Antireflexbeschichtung versehen ist, die einen ersten Reflexionsgrad aufweist,
**dadurch gekennzeichnet dass** das Reflexelement (11) an einer bezüglich der Propagationsrichtung des Nutzlichts rückwärtigen Stirnfläche (41) mit einer zweiten Antireflexbeschichtung versehen ist, die einen zweiten Reflexionsgrad aufweist, wobei der erste Reflexionsgrad größer als der zweite Reflexionsgrad ist, wobei der erste Reflexionsgrad von mindestens 0,3 % bis höchstens 2 % beträgt, und wobei der zweite Reflexionsgrad höchstens 0,2 % beträgt.

2. Lasersystem nach Anspruch 1, **dadurch gekennzeichnet, dass** die Lichtleitfaser (13) einen Mantelbereich (33) aufweist, der den Lichtleitbereich (15) in Umfangsrichtung umgreift.

3. Lasersystem nach einem der vorhergehenden Ansprüche, **dadurch gekennzeichnet, dass** das Reflexelement
- als optisches Strahlformungselement (35) zur Strahlformung des Nutzlichts ausgebildet oder
- zusätzlich zu einem optischen Strahlformungselement (35) in einem Strahlpfad des Nutzlichts angeordnet
ist.

4. Lasersystem nach einem der vorhergehenden Ansprüche, **dadurch gekennzeichnet, dass** das Reflexelement (11) als ein Element ausgebildet ist, das ausgewählt ist aus einer Gruppe, bestehend aus: Einer plan-parallelen Platte und einem Fenster.

5. Lasersystem nach einem der vorhergehenden Ansprüche, **dadurch gekennzeichnet, dass** die Lichtleitfaser (13) als photonische Kristallfaser mit hohlem Kern, als photonische Bandlücken-Faser, als Antiresonante Faser, insbesondere Tubularfaser, oder als gehemmte Kopplungsfaser, insbesondere Kagoméfaser, ausgebildet ist.

6. Lasersystem nach einem der vorhergehenden Ansprüche, **dadurch gekennzeichnet, dass** die Messeinrichtung eingerichtet ist, um eine Einkoppelgüte einer Einkopplung des Nutzlichts in die Lichtleitfasereinheit (5) anhand des erfassten Reflex des Nutzlichts zu beurteilen.

7. Lasersystem (1) nach einem der vorhergehenden Ansprüche, **dadurch gekennzeichnet, dass** die Messeinrichtung (9) eine Lichtmesseinrichtung (43) aufweist, insbesondere eine Kamera oder eine Photodiode, wobei die Lichtmesseinrichtung (43) eingerichtet ist, um eine Lichtleistung und/oder ein Modenprofil des erfassten Reflex des Nutzlichts zu erfassen.

8. Lasersystem (1) nach einem der vorhergehenden Ansprüche, **dadurch gekennzeichnet, dass** die Messeinrichtung (9) eine Steuereinrichtung (45) aufweist, wobei die Koppeleinrichtung (7) eine ansteuerbare Justiereinrichtung (47) zum Justieren der Einkopplung des Nutzlichts in die Lichtleitfasereinheit (5) aufweist, wobei die Steuereinrichtung (45) mit der Justiereinrichtung (47) wirkverbunden und eingerichtet ist, um die Justiereinrichtung (47) in Abhängigkeit von dem erfassten Reflex des Nutzlichts anzusteuern.

9. Lasersystem (1) nach einem der vorhergehenden Ansprüche, **dadurch gekennzeichnet, dass** die Messeinrichtung (9) zusätzlich eingerichtet ist, um einen weiteren, vor dem Einkoppeln in die Lichtleitfasereinheit (5) von einem Strahlpfad des Nutzlichts weggeleiteten Teil des Nutzlichts zu erfassen, wobei die Messeinrichtung (9) weiter eingerichtet ist, um einen unter Verwendung des Nutzlichts mit dem Lasersystem (1) durchgeführten Bearbeitungsprozess anhand des erfassten Reflex des Nutzlichts oder des erfassten Prozesslichts und des erfassten weiteren Teils des Nutzlichts zu beurteilen.

10. Verfahren zum Beurteilen einer Einkoppelgüte der Einkopplung von Nutzlicht einer Laserstrahlungsquelle (3) in eine Lichtleitfasereinheit (5), wobei ein Lasersystem (1) nach einem der Ansprüche 1 bis 9 verwendet wird, und wobei vorzugsweise die Emission des Nutzlichts unterbunden wird, wenn eine Intensität des erfassten Reflex des Nutzlichts unter einen vorbestimmten Schwellenwert abfällt.

## Claims

1. A laser system (1), comprising
- a laser radiation source (3) for emitting useful light,
- an optical fiber unit (5) having an optical fiber (13), wherein the optical fiber (13) has a light guiding region (15) configured to guide useful light through the optical fiber (13), and a first fiber end surface (25), at an input coupling end (21) as a fiber end (17, 19), for coupling laser light into the light guiding region (15), and a second fiber end surface (27), at an output coupling end (23) as another fiber end (17, 19), for coupling the laser light out of the light guiding region (15),
- a coupling device (7) for coupling the useful light into the optical fiber unit (5),
- a reflection element (11) that is arranged downstream of the second fiber end surface (27) in the propagation direction of the useful light and is configured to deflect a reflection of the useful light from the propagation direction and to couple it back into the light guiding region (15) opposite to the propagation direction via the second fiber end surface (27), and comprising
- a measuring device (9) that is arranged upstream of the first fiber end surface (25) in the propagation direction and is configured to capture the reflection of the useful light deflected by the reflection element (11), wherein the reflection element (11) is provided with a first anti-reflection coating on a front end face (39), relative to the propagation direction of the useful light, the first anti-reflection coating having a first reflectance,
**characterized in that** the reflection element (11) is provided with a second anti-reflection coating on a rear end face (41), relative to the propagation direction of the useful light, the second anti-reflection coating having a second reflectance, wherein the first reflectance is greater than the second reflectance, wherein the first reflectance is at least 0.3 % to at most 2 %, and wherein the second reflectance is at most 0.2 %.

2. The laser system according to claim 1, **characterized in that** the optical fiber (13) has a cladding region (33) that reaches around the light guiding region (15) in the circumferential direction.

3. The laser system according to any one of the preceding claims, **characterized in that** the reflection element
- is designed as an optical beam shaping element (35) for performing beam shaping of the useful light or
- is arranged in a beam path of the useful light in addition to being an optical beam shaping element (35).

4. The laser system according to any one of the preceding claims, **characterized in that** the reflection element (11) is designed as an element selected from a group consisting of: a plane-parallel plate and a window.

5. The laser system according to any one of the preceding claims, **characterized in that** the optical fiber (13) is designed as a hollow-core photonic crystal fiber, as a photonic band gap fiber, as an anti-resonant fiber, in particular a tubular fiber, or as an inhibited coupling fiber, in particular a Kagomé fiber.

6. The laser system according to any one of the preceding claims, **characterized in that** the measuring device is configured to assess an input coupling quality of a coupling of the useful light into the optical fiber unit (5) based on the captured reflection of the useful light.

7. The laser system (1) according to any one of the preceding claims, **characterized in that** the measuring device (9) has a light measuring device (43), in particular a camera or a photodiode, wherein the light measuring device (43) is configured to capture a light power and/or a mode profile of the captured reflection of the useful light.

8. The laser system (1) according to any one of the preceding claims, **characterized in that** the measuring device (9) has a control device (45), wherein the coupling device (7) has a controllable aligning device (47) for aligning the coupling of the useful light into the optical fiber unit (5), wherein the control device (45) is operatively connected to the aligning device (47) and is configured to control the aligning device (47) depending on the captured reflection of the useful light.

9. The laser system (1) according to any one of the preceding claims, **characterized in that** in addition, the measuring device (9) is configured to capture a further portion of the useful light that is guided away from a beam path of the useful light before the light is coupled into the optical fiber unit (5), wherein the measuring device (9) is further configured to assess a machining process performed with the laser system (1) using the useful light, the assessment being based on the captured reflection of the useful light or on the captured process light and on the captured further portion of the useful light.

10. A method for assessing an input coupling quality of the coupling of useful light of a laser radiation source (3) into an optical fiber unit (5), wherein a laser system (1) according to any one of claims 1 to 9 is used, and wherein the emission of the useful light is preferably suppressed if an intensity of the captured reflection of the useful light falls below a predetermined threshold value.

## Revendications

1. Système laser (1) comprenant
- une source de rayonnement laser (3) destinée à l'émission de lumière utile,
- une unité de fibre optique (5) qui présente une fibre optique (13), dans laquelle la fibre optique (13) présente une zone de guidage de lumière (15) configurée pour guider la lumière utile à travers la fibre optique (13) et, à une extrémité de couplage (21) en tant qu'une extrémité de fibre (17, 19), une première surface d'extrémité de fibre (25) destinée au couplage de la lumière laser dans la zone de guidage de lumière (15) et, à une extrémité de découplage (23) en tant qu'une autre extrémité de fibre (17, 19), une deuxième surface d'extrémité de fibre (27) destinée au découplage de la lumière laser hors de la zone de guidage de lumière (15),
- un dispositif de couplage (7) destiné à coupler la lumière utile dans l'unité de fibre optique (5),
- un élément réfléchissant (11) qui est disposé, dans la direction de propagation de la lumière utile, en aval de la deuxième surface d'extrémité de fibre (27) et qui est configuré pour dévier un reflet de la lumière utile hors de la direction de propagation et pour le coupler en retour, en sens opposé à la direction de propagation, via la deuxième surface d'extrémité de fibre (27), dans la zone de guidage de lumière (15), et comprenant
- un dispositif de mesure (9) disposé, dans la direction de propagation, en amont de la première surface d'extrémité de fibre (25), qui est configuré pour détecter le reflet de la lumière utile dévié par l'élément réfléchissant (11), dans lequel l'élément réfléchissant (11) est pourvu, sur une face frontale (39) située à l'avant par rapport à la direction de propagation de la lumière utile, d'un premier revêtement antireflet, qui présente un premier degré de réflexion,
**caractérisé en ce que** l'élément réfléchissant (11) est pourvu, sur une face frontale (41) à l'arrière par rapport à la direction de propagation de la lumière utile, d'un deuxième revêtement antireflet présentant un deuxième degré de réflexion, dans lequel le premier degré de réflexion est supérieur au deuxième degré de réflexion, dans lequel le premier degré de réflexion est d'au moins 0,3 % et d'au plus 2 %, et dans lequel le deuxième degré de réflexion est d'au plus 0,2 %.

2. Système laser selon la revendication 1, **caractérisé en ce que** la fibre optique (13) présente une zone de gaine (33) qui entoure la zone de guidage de lumière (15) dans la direction circonférentielle.

3. Système laser selon l'une quelconque des revendications précédentes, **caractérisé en ce que** l'élément réfléchissant
- est réalisé comme élément optique de mise en forme du faisceau (35) destiné à la mise en forme du faisceau de la lumière utile, ou
- est disposé, en plus d'un élément optique de mise en forme du faisceau (35), dans un trajet de faisceau de la lumière utile.

4. Système laser selon l'une quelconque des revendications précédentes, **caractérisé en ce que** l'élément réfléchissant (11) est réalisé comme un élément sélectionné à partir d'un groupe se composant de : une plaque plan-parallèle et d'une fenêtre.

5. Système laser selon l'une quelconque des revendications précédentes, **caractérisé en ce que** la fibre optique (13) est réalisée comme une fibre à cristal photonique à cœur creux, comme une fibre à bande interdite photonique, comme une fibre antirésonante, en particulier une fibre tubulaire, ou comme une fibre à couplage inhibé, en particulier une fibre Kagomé.

6. Système laser selon l'une quelconque des revendications précédentes, **caractérisé en ce que** le dispositif de mesure est configuré pour évaluer une qualité de couplage d'un couplage de la lumière utile dans l'unité de fibre optique (5) sur la base du reflet détecté de la lumière utile.

7. Système laser (1) selon l'une quelconque des revendications précédentes, **caractérisé en ce que** le dispositif de mesure (9) présente un dispositif de mesure de lumière (43), en particulier une caméra ou une photodiode, dans lequel le dispositif de mesure de lumière (43) est configuré pour détecter une puissance lumineuse et/ou un profil modal du reflet détecté de la lumière utile.

8. Système laser (1) selon l'une quelconque des revendications précédentes, **caractérisé en ce que** le dispositif de mesure (9) présente un dispositif de commande (45), dans lequel le dispositif de couplage (7) présente un dispositif de réglage commandable (47) destiné à ajuster le couplage de la lumière utile dans l'unité de fibre optique (5), dans lequel le dispositif de commande (45) est relié fonctionnellement au dispositif de réglage (47) et est configuré pour commander le dispositif de réglage (47) en fonction du reflet détecté de la lumière utile.

9. Système laser (1) selon l'une quelconque des revendications précédentes, **caractérisé en ce que** le dispositif de mesure (9) est également configuré pour détecter une autre partie de la lumière utile, dérivée hors d'un trajet de faisceau de la lumière utile avant le couplage dans l'unité de fibre optique (5), dans lequel le dispositif de mesure (9) est en outre configuré pour évaluer un procédé d'usinage exécuté à l'aide de la lumière utile avec le système laser (1) sur la base du reflet détecté de la lumière utile ou de la lumière de procédé détectée et de l'autre partie détectée de la lumière utile.

10. Procédé d'évaluation d'une qualité de couplage du couplage de la lumière utile d'une source de rayonnement laser (3) dans une unité de fibre optique (5), dans lequel un système laser (1) selon l'une quelconque des revendications 1 à 9 est utilisé, et dans lequel, de préférence, l'émission de la lumière utile est empêchée lorsqu'une intensité du reflet détecté de la lumière utile tombe en dessous d'une valeur seuil prédéterminée.
